(19) Europäisches Patentamt
European Patent Office
Office européen des brevets

(11) EP 0 547 803 B1

(12) **EUROPEAN PATENT SPECIFICATION**

(45) Date of publication and mention
of the grant of the patent:
**04.03.1998 Bulletin 1998/10**

(51) Int Cl.⁶: **H02M 3/07**

(21) Application number: **92310967.2**

(22) Date of filing: **01.12.1992**

(54) **Voltage multiplier**

Spannungsvervielfacher

Multiplicateur de tension

(84) Designated Contracting States:
**DE FR GB SE**

(30) Priority: **19.12.1991 FI 916007**

(43) Date of publication of application:
**23.06.1993 Bulletin 1993/25**

(73) Proprietor: **NOKIA MOBILE PHONES LTD.**
**24101 Salo (FI)**

(72) Inventor: **Rapeli, Juha**
**SF-90570 Oulu (FI)**

(74) Representative: **Frain, Timothy John**
**Patent Department**
**Nokia Mobile Phones**
**St Georges Court**
**St Georges Road**
**Camberley, Surrey GU15 3QZ (GB)**

(56) References cited:
**US-A- 4 106 086**     **US-A- 5 051 881**

• **SOVIET PATENTS ABSTRACTS Week 7625,**
**Derwent Publications Ltd., London, GB; AN**
**76-F6520X & SU-A-483 772 (ZIMNIKOV) 13**
**December 1975**

Remarks:
The file contains technical information submitted
after the application was filed and not included in this
specification

EP 0 547 803 B1

## Description

The invention relates to a voltage multiplier for use in applications having a pulse like load, particularly but not exclusively, a burst-mode radio transmitter.

In order to function with a high efficiency ratio, Si and GaAs transmitters require a voltage of 5-7V, whereas in other respects it would be expedient from the viewpoint of the product to use a battery of three NiCd or NiMH cells, with a voltage of about 3V.

In a prior art system, an unregulated voltage of 6-8V is fed to the transmitter from a battery of five or six cells. In the case of a time-division multiple access (TDMA) system transmission is not continuous but occurs during specified time slots of each TDMA frame. This is called a burst-mode transmission. In this case three cells may be used, and a continuous-working voltage multiplier may be turned off for the duration of the transmission of a TDMA frame, during which the transmitter takes its current from the capacitor.

Many methods are known for increasing the voltage by means of chopper circuits. These are suitable for applications where current consumption is continuous.

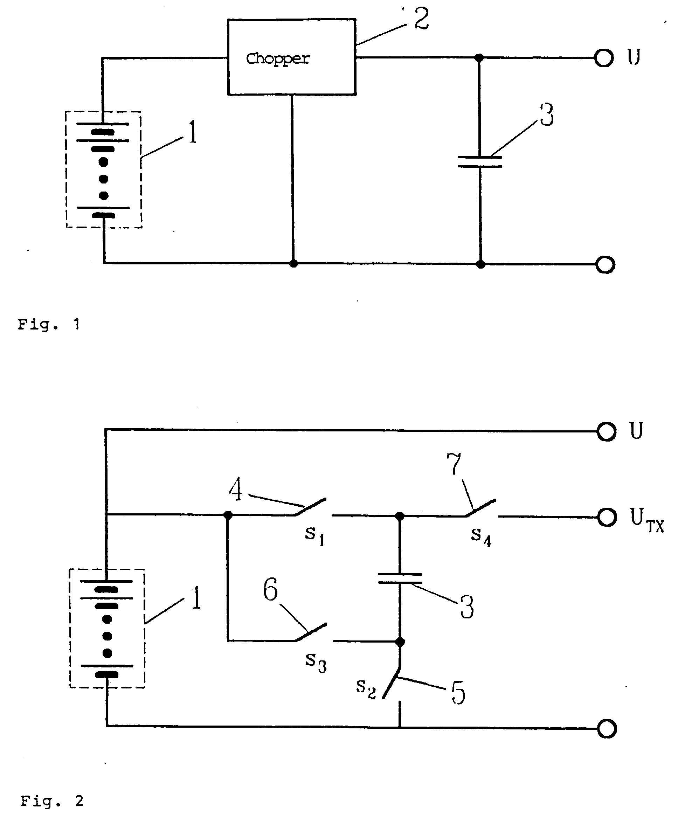

The state of the art is described below with reference to accompanying Figure 1, which depicts a prior art circuit for increasing the voltage by means of a chopper. Various known chopper circuits are described, for example, in the publication "Advanced Linear European Seminars for Precision Design of the 90's", publisher Texas Instruments UK, 1990, pp. 59-82.

Figure 1 depicts a prior art circuit for increasing the voltage by means of a chopper. The power source 1 feeds direct current to the chopper 2, which cuts the current on and off, thereby producing an alternate current of the desired voltage. The capacitor in the figure is indicated by 3.

The problems have included interferences derived from the chopper, since in the chopper the switches are opened and closed while conducting current. When the voltage of the battery is multiplied by a factor of by means of the chopper, the current taken from the battery will increase to a level times the current going to the load. Power losses will also increase.

Voltage multipliers which include capacitive energy storage means, and switching means for selectively applying an input voltage to the capacitive storage means are disclosed in GB-A-2,245,112 and US-A-5,051,881.

The present invention is defined in the appended claims.

Preferably, the second state of the switching means is enabled and disabled substantially to coincide with the respective start and end of a transmission burst. In this way the increased output voltage may be synchronized with the respective transmission time slot of a TDMA frame, i.e. the higher voltage is produced during the time interval when the transmitter is actually transmitting.

The first state of the switching means may be maintained continuously prior to each transmission burst. Thus, charge pumping (i.e. charge storage in the capacitive means) may be effected only once during each TDMA frame, prior to discharge when the second state of the switching means is enabled. This contrasts with the chopper principle used in the prior art, where charge pumping is carried out tens, or even hundreds, of times during one TDMA frame.

Embodiments of the invention are described below, by way of example, with reference to the accompanying figures, in which:

Figure 1 depicts a prior-art circuit for increasing voltage by means of a chopper;

Figure 2 depicts a voltage multiplier circuit in accordance with the invention;

Figure 3 depicts the data regarding the state of the switches of a voltage multiplier in accordance with the invention, specifically the increased voltage, and the current taken from the battery, as a function of time;

Figure 4 depicts a modified voltage multiplier in accordance with the invention; and

Figure 5 depicts a further voltage multiplier circuit in accordance with the invention for increasing battery voltage and for compensating for battery voltage fluctuation.

Figure 2 depicts a voltage multiplier circuit in accordance with the invention for increasing battery voltage by means of a capacitor. The pumping of charge to the capacitor 3, to be carried out during a TDMA frame, is implemented by using switch pairs 4, 5 and 6, 7. The switches are coupled to conduct current in alternation, in such a manner that both switch pairs 4, 5 and 6, 7 will not conduct current simultaneously.

A direct transfer of a charge impulse, with a loss, to the capacitor 3 is implemented using the switch pairs 4, 5 and 6, 7.

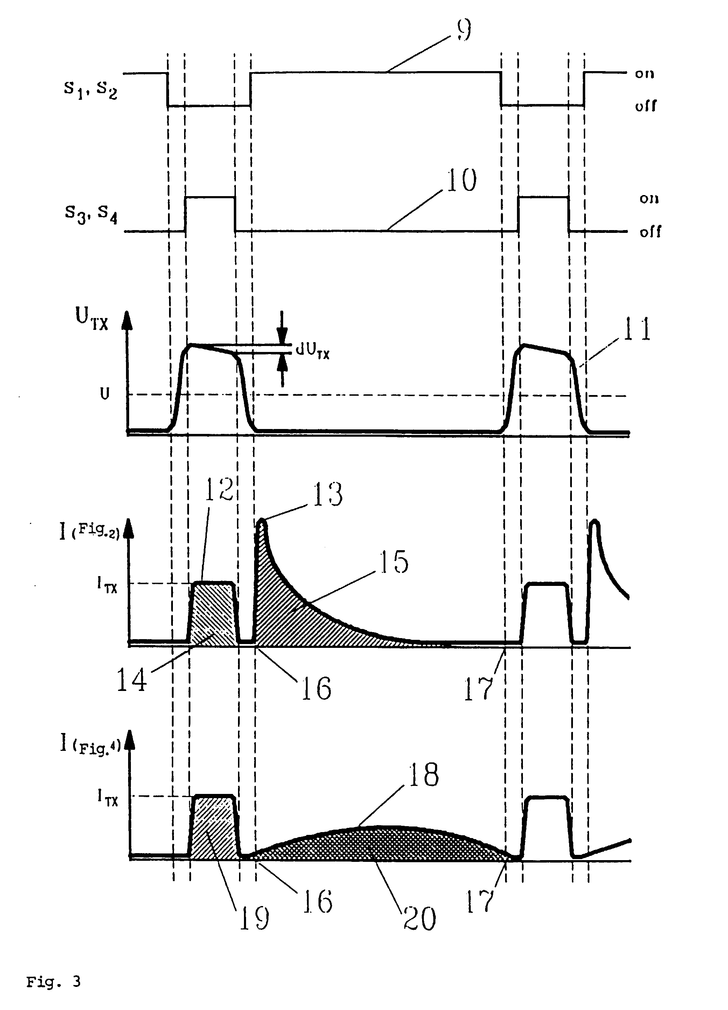

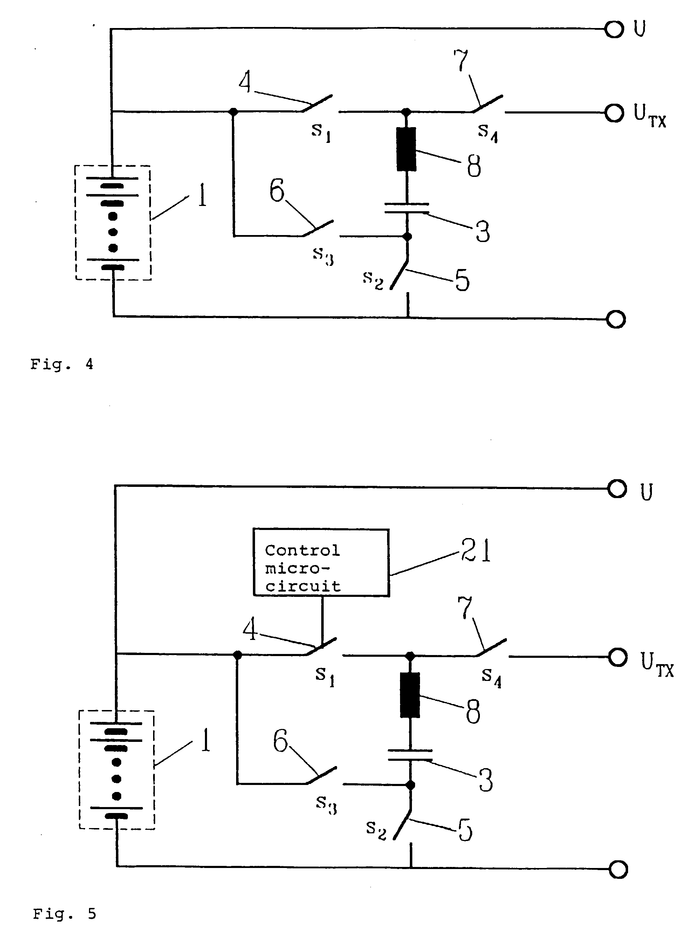

In the circuit of Figure 2, part of the transferred energy always goes into switch losses, depending on the capacitance of the battery. This relatively simple circuit implementation is also characterized in that, when the capacitor 3 has been discharged to a voltage level below the battery voltage as the switches 4 and 5 close to conduct current, the travel of current from the battery to the capacitor is sudden, and respectively part of the transferred energy is lost in switch losses. The sudden return of the capacitor charge from the battery is shown as a current pulse 15 in Figure 3. Since the current to the load is of the same magnitude both from the battery and from the capacitor when these are coupled in series at the time concerned, the current/time surface areas 14, 15, 19 and 20, shown hatched in Figure 3, are equal in size. It can be observed that in the case of Figure 2, as the switches S1, S2 (Figure 2, reference numerals 4, 5) become conductive at the point of time 16, the increase in current is sudden and its peak value 13 can be very high. In the circuits of both Figure 2 and Figure 4, the current at the point of time 17 (Figure 3), as the switch pair S1, S2 becomes non-conductive, is low. When the on/off ratio of a TDMA transmission is small, the peak 19 (Figure 3) of the current pulse can be limited to a very low level with the help of the inductance L. Such a circuit is shown in Figure 4.

Using this circuit alternative, in principle a situation is achieved in which there is practically no loss.

Figure 3 shows the data regarding the states of the switches of a circuit according to the invention, the increased voltage, and the current taken from the battery, as functions of time, when the duration of the load feed is 1/8 of the time frame. The open and closed states of the switches s1 (4) and s2 (5) as functions of time are indicated by numeral 9, and the open and closed states of the switches s3 (6) and s4 (7) as functions of time are indicated by numeral 10. The increased voltage $U_{TX}$ as a function of time is indicated by numeral 11, and the current I taken from the battery 1 in the circuit of Figure 2 as a function of time is indicated by numeral 12 and the current taken from the battery in the circuit of Figure 4 by numeral 18. It is noted here that the period between S1,S2 switching off a first time and switching off the next time corresponds substantially to the duration of a TDMA frame. The time over which the higher voltage $U_{TX}$ is produced corresponds to the transmission time slot, i.e. ⅛ of the whole TDMA frame. As is well known, the transmit time slot is allocated to a particular transmitter, in a TDMA communications system, and this information is used locally to generate a TDMA frame pulse for timing purposes. In the present case the higher voltage $U_{TX}$ is synchronized with the TDMA frame pulse.

Figure 5 shows another circuit in accordance with the invention for increasing battery voltage and for compensating for battery voltage fluctuation. The circuit differs from the circuit of Figure 4 in that it has a control microcircuit 21 controlling the switch 4. The capacitor 3 is charged to a voltage at which the sum of the voltages of the capacitor 3 and the battery 1 is constant.

The inductance L (reference numeral 8) limits to a very low level the current pulse generated when the switch closes, since, as is known, in an inductance the current increase velocity dI/dT

$$\Delta U = -L \frac{di}{dt} \text{ or } \frac{di}{dt} = -\Delta U / L$$

is limited.

In accordance with the present invention, the switches are opened and closed in a practically current-free state, in which case only a limited closing current will be produced. In a circuit according to conventional technology, the current is cut off suddenly, from which a considerable amount of interference will result.

In a voltage multiplier in accordance with the invention, current is not multiplied in the power source, i.e. the battery. The circuit implementation is clear and simple, and it also serves as a filter.

When the consumption of current during the transmission time T of a TDMA frame is $I_{TX}$, the voltage drop caused by it in the capacitor 3 is

$$dU_{TX} = ( I_{TX} * dT ) / C$$

When the value of the capacitance C is calculated for the present circuit, for example, with an on time of dT = 416 µs and a current consumption of $I_{TX} = {}_T 200$ mA and a permitted voltage drop of $dU_{TX} < 0.5$ V, a value of $C \geq 16+$ µF is obtained. This value can easily be achieved.

Thus, voltage can be increased and made constant simply, without the level of the electromagnetic interference (EMI) of the equipment rising too high.

With the present voltage multiplier, high efficiency and freedom from interference can be obtained. When the voltage is made constant, the transmitter efficiency can be optimized. The circuit is relatively straightforward to implement. The switching part can, for example, be integrated into the same circuit as the power control of the transmitter.

On the basis of the present description it will be evident to an expert in the art that the same method can be applied using several capacitors coupled in series to multiply the voltage by a figure higher than two.

Furthermore, it will be evident to an expert in the art that the application of the principle of the invention may in practice require the use of components not referred to in the description, such as switch-protecting diodes.

**Claims**

1. A method of feeding power to a burst-mode radio transmitter from a voltage multiplier comprising a voltage source (1); a capacitive means (3) and a switching means (S1-S4) having a first state in which the voltage source (6) is coupled in parallel to the capacitive means (3) to enable charge storage in the capacitive means and a second state in which the voltage source (1) and the capacitive means are coupled in series to provide an output voltage for the transmitter greater than the voltage of the voltage source, the method including the steps of

enabling the second state of the switching means (S1-S4) for the duration of a transmission burst in a transmitter and enabling the first state of the switching means (S1-S4) between transmission bursts.

2. A method as in Claim 1, wherein the switching means (S1-S4) has a third state in which the voltage source (6) and the capacitive means (3) are decoupled from the output means and including the further step of enabling the third state immediately prior to and after a transmission burst.

3. A method as in Claims 1 or 2, wherein the state of the switching means is changed only when the current flow is substantially zero.

4. A method as in any preceding claim, wherein the switching means comprises two pairs of switches operating in tandem, one pair of switches (S1-S2) being open when the other pair (S3-S4) are closed, and said one pair of switches being closed when said other pair are open.

5. A method as in any preceding claim, wherein the voltage multiplier further includes inductance means (8) coupled to the capacitive means (3).

6. A method as in Claim 5, wherein the inductance means (8) are coupled in series with the capacitive means (3) when the switching means (S1-S4) are in the first and second states.

7. A combination of a burst mode radio transmitter and a voltage multiplier comprising a voltage source (1), a capacitive means (3) and a switching means (S1-S4) for performing a method as in any preceding claim.

**Patentansprüche**

1. Verfahren zur Leistungsspeisung eines stoßbetriebenen Funksenders durch einen Spannungsvervielfacher mit einer Spannungsquelle (1), kapazitiven Mitteln (3) und Schaltmitteln (S1- S4), die einen ersten Zustand aufweisen, bei dem zur Speicherung von Ladung in den kapazitiven Mitteln (3) die Spannungsquelle (1) parallel zu den kapazitiven Mitteln (3) geschaltet ist, und die einen zweiten Zustand aufweisen, bei dem die Spannungsquelle (1) und die kapazitiven Mittel (3) in Reihe geschaltet sind, um eine Ausgangsspannung für den Sender bereitzustellen, die größer als die Spannung der Spannungsquelle ist, wobei das Verfahren folgende Schritte enthält:

Aktivierung des zweiten Zustands der Schaltmittel (S1-S4) in einem Sender für die Dauer eines Sendestosses und Aktivierung des ersten Zustands der Schaltmittel (S1-S4) zwischen den Sendestössen.

2. Verfahren nach Anspruch 1, bei dem in einem dritten Zustand der Schaltmittel (S1-S4) die Spannungsquelle (1) und die kapazitiven Mittel (3) von den Ausgangsmitteln entkoppelt sind, und ein weiterer Schritt zur sofortigen Aktivierung des dritten Zustands vor und nach einem Sendestoß enthalten ist.

3. Verfahren nach Anspruch 1 oder 2, bei dem ein Zustandswechsel der Schaltmittel nur erfolgt, wenn der Stromfluß im wesentlichen gleich null ist.

4. Verfahren nach irgendeinem der vorangegangenen Ansprüche, bei dem die Schaltmittel zwei tandembetriebene Schalterpaare enthalten, von denen das eine Schalterpaar (S1-S2) offen ist, wenn das andere Schalterpaar (S3-S4) geschlossen ist, und das eine Schalterpaar geschlossen ist, wenn das andere Schalterpaar offen ist.

5. Verfahren nach irgendeinem der vorangegangenen Ansprüche, bei dem der Spannungsvcrvielfacher ferner induktive Mittel (8) enthält, die mit den kapazitiven Mitteln (3) gekoppelt sind.

6. Verfahren nach Anspruch 5, bei dem im ersten und zweiten Zustand der Schaltmittel (S1-S4) die induktiven Mittel (8) und die kapazitiven Mittel (3) in Reihe geschaltet sind.

7. Kombination eines stoßbetriebenen Funksenders und eines Spannungsvervielfachers, der eine Spannnungsquelle (1), kapazitive Mittel (3) und Schaltmittel (S1-S4) enthält, zur Durchführung eines Verfahren nach irgendeinem der vorangegangenen Ansprüche.

**Revendications**

1. Procédé pour délivrer l'énergie à un émetteur radio en mode salves à partir d'un multiplicateur de tension comprenant une source de tension (1) ; un moyen capacitif (3) et un moyen de commutation (S1 à S4) ayant un premier état dans lequel la source de tension (6) est couplée en parallèle au moyen capacitif (3) pour permettre le stockage de charge dans le moyen capacitif et un second état dans lequel la source de tension (1) et le moyen capacitif sont couplés en série afin de délivrer une tension de sortie pour l'émetteur supérieur à la tension de la source de tension, le procédé comprenant les étapes consistant à :

activer le second état du moyen de commutation (S1 à S4) pendant la durée d'une salve d'émission dans un émetteur et activer le premier état du moyen de commutation (S1 à S4) entre les salves d'émission.

2. Procédé selon la revendication 1, dans lequel le moyen de commutation (S1 à S4) a un troisième état dans lequel la source de tension (6) et le moyen capacitif (3) sont découplés du moyen de sortie et comprenant l'étape supplémentaire consistant à activer le troisième état immédiatement avant et après une salve d'émission.

3. Procédé selon les revendications 1 ou 2, dans lequel l'état du moyen de commutation est changé seulement lorsque la circulation du courant est pratiquement égale à zéro.

4. Procédé selon l'une quelconque des revendications précédentes, dans lequel le moyen de commutation comprend deux paires d'interrupteurs fonctionnant en tandem, une paire d'interrupteurs (S1 à S4) étant ouverte lorsque l'autre paire (S3 à S4) est fermée et ladite première paire d'interrupteurs étant fermée lorsque ladite autre paire est ouverte.

5. Procédé selon l'une quelconque des revendications précédentes, dans lequel le multiplicateur de tension comprend de plus des moyens d'inductances (8) couplé au moyen capacitif (3).

6. Procédé selon la revendication 5, dans lequel les moyens d'inductance (8) sont couplés en série avec le moyen capacitif (3) lorsque les moyen de commutation (S1 à 54) sont dans les premier et second états.

7. Combinaison d'un émetteur radio en mode salves et d'un multiplicateur de tension comprenant une source de tension (1), un moyen capacitif (3) et un moyen de commutation (S1 à S4) pour mettre en oeuvre un procédé selon l'une quelconque des revendications précédentes.

Fig. 1

Fig. 2

Fig. 3

Fig. 4

Fig. 5